# Europäisches Patentamt
# European Patent Office
# Office européen des brevets

(11) Veröffentlichungsnummer: **0 005 470**

**A1**

## (12) EUROPÄISCHE PATENTANMELDUNG

(21) Anmeldenummer: **79101284.2**

(22) Anmeldetag: **30.04.79**

(51) Int. Cl.²: **C 08 J 9/00**
**C 08 L 75/04**

(30) Priorität: **11.05.78 DE 2820609**

(43) Veröffentlichungstag der Anmeldung:
**28.11.79 Patentblatt 79/24**

(84) Benannte Vertragsstaaten:
**BE DE FR GB IT NL SE**

(71) Anmelder: **BASF Aktiengesellschaft**
**Carl-Bosch-Strasse 38**
**D-6700 Ludwigshafen(DE)**

(72) Erfinder: **Deissler, Hubert**
**Goethestrasse 12 b**
**D-6701 Waldsee(DE)**

(72) Erfinder: **Volkert, Otto, Dr.**
**Im Eiertal 10**
**D-6719 Weisenheim(DE)**

(72) Erfinder: **Gehm, Robert, Dr.**
**Mannheimer Strasse 45**
**D-6703 Limburgerhof(DE)**

(72) Erfinder: **Marx, Matthias, Dr.**
**Seebacher Strasse 49**
**D-6702 Bad Duerkheim 1(DE)**

(72) Erfinder: **Nissen, Dietmar, Dr.**
**Ziegelhaeuser Landstrasse 31**
**D-6900 Heidelberg(DE)**

(54) **Verfahren zur Herstellung von Polyurethanschaumstoffen mit verbesserten mechanischen Eigenschaften.**

(57) Die Erfindung betrifft ein Verfahren zur Herstellung von Polyurethanschaumstoffen mit verbesserten mechanischen Eigenschaften aus organischen Polyisocyanaten, Polyolen, Katalysatoren, Treibmitteln und Zusatzstoffen, die als Füllstoffe Alkalisalze anorganischer Säuren, vorzugsweise in Mengen von 0,01 bis 5 Gew.%, bezogen auf das Gesamtgewicht der organischen Polyisocyanats und Polyols, enthalten, wobei die Alkalisalze der anorganischen Säuren gelöst in einer oder mehreren der obengenannten flüssigen Ausgangskomponenten, vorzugsweise gelöst in Äthylenglykol und/oder Wasser, insbesonders in Form einer wäßrigen Lösung der schaumfähigen Reaktionsmischung einverleibt werden.

Croydon Printing Company Ltd.

0005470

BASF Aktiengesellschaft          O.Z. 0050/033167

<u>Verfahren zur Herstellung von Polyurethanschaumstoffen mit verbesserten mechanischen Eigenschaften</u>

Die Erfindung betrifft ein Verfahren zur Herstellung von Polyurethanschaumstoffen auf Basis von organischen Polyisocyanaten, Polyolen, Katalysatoren, Treibmitteln, gegebenenfalls Kettenverlängerungsmittel und Zusatzstoffen in Gegenwart von Lösungen von Alkalisalzen von anorganischen Säuren in den obengenannten Ausgangskomponenten, als Füllstoffe.

Es ist bekannt, Polyurethan-Kunststoffe mit verschiedenartigen physikalischen Eigenschaften dadurch herzustellen, daß man Verbindungen mit mehreren aktiven Wasserstoffatomen, insbesondere Polyhydroxyverbindungen, mit Polyisocyanaten, gegebenenfalls unter Mitverwendung von Polymeren als Verstärkungsmitteln, Kettenverlängerungsmitteln, Vernetzungsmitteln, Treibmitteln, Aktivatoren, Emulgatoren und anderen Zusatzstoffen umsetzt. Bei geeigneter Wahl der Komponenten lassen sich auf diese Weise sowohl elastische als auch starre Schaumstoffe, Lackierungen, Imprägnierungen, Beschichtungen oder Elastomere herstellen.

Als Verstärkungsmittel für Form- und Blockschaumstoffe aus Polyurethanen kommen beispielsweise sogenannte Pfropfpolyole oder hochmolekulare organische Füllstoffe in Betracht. Unter

M/BL

Pfropfpolyolen versteht man dabei Polyole, auf deren Polyätherkette durch radikalische Polymerisation Polymere auf Basis Styrol, Acrylnitril u.a. aufgepfropft worden sind. Unter hochmolekularen Füllstoffen werden ähnliche Polymere, die jedoch nicht auf das Polyätherol aufgepfropft, sondern lediglich darin suspendiert sind, verstanden. Andere bekannte Füllstoffe sind Polyharnstoffe auf Basis 2,4-Toluylendiisocyanat und Hydrazin.

Durch die genannten Verstärkungsmittel können vorallem die folgenden Eigenschaften in vorteilhafter Weise verbessert werden. Die Stauchhärte und damit verbunden die Tragfähigkeit der Schaumstoffe kann ebenso erhöht werden wie die Offenzelligkeit, die ihrerseits eine Verringerung des Nachschrumpfens von Weich- und Weichintegralschaumstoffen bewirkt. Weniger bedeutungsvoll sind eine geringfügige Vergrößerung der Zugfestigkeit und verschlechterte Reißdehnung des Schaumstoffes.

Diese Eigenschaftsverbesserungen werden gleichermaßen bei normalen weichen, halbharten und harten Schaumstoffen sowie bei weichen, halbharten und harten Integralschaumstoffen, d.h. bei Schäumen mit einem zelligen Schaumkern und einer ungeschäumten, kompakten Außenhaut erreicht.

Nachteilig an diesem Verfahren ist, daß die benötigten Pfropfpolymeren und polymeren Füllstoffe in einem getrennten Arbeitsgang hergestellt werden müssen.

Da für viele Anwendungsgebiete die Polyhydroxylverbindungen nicht in Form von Lösungen eingesetzt werden können, spielt bei der Herstellung von Polyurethankunststoffen die Viskosität der verwendeten Polymer-Polyol-Gemische eine wesentliche Rolle. Das gilt besonders für die Herstellung von Polyurethanschaumstoffen, bei der sich die Polymer-Polyol-Mischung einwandfrei über Pumpen fördern und dosieren sowie in Mischkammern homogen und möglichst schnell mit der Isocyanatkomponente sowie den Zusatzmitteln wie Aktivatoren, Emulgatoren, Wasser und/oder Treibmitteln vermischen lassen müssen. Aus diesem Grunde sind bei der Herstellung von Polyurethanschaumstoffen möglichst niedrige Viskositäten erwünscht.

Durch schlechte Vermischung der Reaktanten bei der Polyurethanherstellung infolge von hohen Viskositäten treten Inhomogenitäten bzw. Schaumstörungen mit allen Nachteilen für die Qualität der Produkte auf.

Es ist weiterhin bekannt, daß durch Zusatz von Polymerisaten, die mit Isocyanaten reaktive Gruppen enthalten, die Tragfähigkeit von flexiblen Polyurethanschäumen niederer Dichte erhöht werden kann (US-PS 3 523 093). Nachteilig an dem beschriebenen Verfahren ist zunächst, daß die als Füllstoffe geeigneten Polymeren in Gegenwart von monofunktionellen aktive Wasserstoffatome aufweisenden organischen Lösungsmitteln, nämlich Alkoholen und Mercaptanen polymerisiert werden müssen. Verfährt man analog den Angaben dieser Publikation und verwendet die dort beschriebenen spröden Polymerisat-Pulver als Füllstoffe, dann steigt bei höheren Konzentrationen des Polymerisats in der Polyhydroxyverbindung die Viskosität der Mischung derart stark an, daß die Mischung technisch schwer zu handhaben ist, da sie nicht mehr frei fließt. Da die Polymerisat-Pulver relativ rasch sedimentieren, sind die Dispersionen ferner nicht lagerstabil.

Dieser US-PS ist außerdem zu entnehmen, daß die darin beschriebenen Polymerisate nicht mehr verwendet werden können, wenn ein gewisses Molekulargewicht überschritten wird, da dann die Viskosität der Polymer-Polyol-Abmischung so hoch wird, daß eine Verwendung zur Polyurethanherstellung nicht mehr möglich ist.

Nach Angaben der US-PS 3 869 413 werden flexible Polyurethanschaumstoffe aus Polyisocyanaten und einem Polyätherpolyol hergestellt, welches ein Polymer in Latexform mit einer Teilchengröße von 1.000 bis 10.000 Å in einer Menge von 2 bis 50 Gewichtsprozent, bezogen auf die Polymer-Polyol-Abmischung, enthält und wobei das Polymere erhalten wird durch Polymerisation von einem oder mehreren äthylenisch ungesättigten Monomeren, die frei sind von Gruppen, die mit Isocyanat- oder Hydroxylgruppen unter Urethanbildungsbedingungen reagieren können. Nachteilig an diesem Verfahren ist, daß die mechanischen Eigenschaften, insbesonders die Zugfestigkeit, der auf diese Art hergestellten Weichschaumstoffe unbefriedigend ist. Ferner sind die Feststoffgehalte der wässerigen Polymerdispersion, insbesonders bei Styrol-Acrylnitril-Copolymerisaten mit großem Acrylnitrilgehalt, äußerst gering, so daß hohe Verfahrenskosten mit der Entwässerung verbunden sind.

Bekannt sind ferner Dispersionen von Copolymeren, vorzugsweise Styrol-Acrylnitril-Copolymeren in Hydroxylgruppen aufweisenden Polyäthern (deutsche Patentschriften 12 22 669, 11 52 536 und 11 52 537). Werden die Vinylmonomeren direkt in den Polyolen copolymerisiert, so sind die erhaltenen Teilchen im allgemeinen so klein, daß keine Neigung zur Sedimentation besteht. Nachteilig bei diesen Dispersionen ist jedoch, daß sie frei von Monomeren sein müssen, um möglichst geruchlose Schaumstoffe zu ergeben, denn nur solche Produkte können in den typischen Einsatzgebieten verwendet werden. Dies bedeutet jedoch, daß die Monomeren beispielsweise mit Hilfe von Dünnschichtverdampfern aus den Dispersionen abgetrennt werden müssen.

Zum Stand der Technik gehören auch Verfahren, bei denen inerte Füllstoffe organischer oder anorganischer Art in eine der zur Verschäumung dienenden Ausgangskomponente oder direkt in das Verschäumungsgemisch, beispielsweise in der Mischkammer der Verschäumungsmaschine, einverleibt werden. Aber auch diese Verfahren besitzen schwerwiegende Nachteile. So ist es bei Verwendung üblicher Füllstoffe äußerst schwierig, Dispersionen mit so feiner Kornverteilung herzustellen, daß lagerstabile Mischungen erhalten werden. Die Gefahr der Sedimentbildung ist stets stark ausgeprägt, dies führte dazu, daß derartige Dispersionen zur Vermeidung schwieriger Redispergiervorgänge stets mehr oder weniger intensiv gerührt werden müssen.

Zwar werden für besondere Zwecke der Schall- und Wärmedämmung mit Schwerspat gefüllte Polyurethanschaumstoffe verwendet. Jedoch müssen die Rohstoffe hierfür mit eigens konstruierten Maschinen verarbeitet werden, insbesonders solchen, die nach dem Prinzip der Niederdrucktechnik und mit Rührwerkvermischung arbeiten.

Die mit der Anwendung dieser Verarbeitungsmaschinen verbundenen Nachteile sind so gravierend, daß ein technischer Einsatz der gefüllten Polyurethanschaumstoffe bisher nicht erfolgte.

Nach Angaben der JA-AS 16 753/1977 werden Polyurethan-Schaumstoffe mit guten elektrostatischen Eigenschaften aus Polyisocyanaten und Polyolen erhalten, wenn man den Einsatzstoffen Alkalimetallhalogenide in Konzentrationen von 0,01 bis 10 Gew.% zusetzt. Nachteilig an diesem Verfahren ist, daß sich die Alkalimetallhalogenide üblicherweise in den Einsatzstoffen nicht lösen, so daß die vorteilhafte Erhöhung der Stauchhärte der Schaumstoffe nicht beobachtet werden kann.

Aufgabe der vorliegenden Erfindung war es, die beschriebenen, bei der Verarbeitung von Pfropfpolymeren und polymeren Füllstoffen zu Polyurethanschaumstoffen auftretenden Nachteile zu beseitigen.

Es wurde überraschenderweise gefunden, daß man eine beträchtliche Verbesserung der mechanischen Eigenschaften von Polyurethanschaumstoffen erzielen kann, die in vielen Fällen sogar erheblich besser ist als bei solchen, die als Verstärkungsmittel Pfropfpolymere oder polymere Füllstoffe enthalten, wenn man geringe Mengen von Alkalisalzen anorganischer Säuren, gelöst in einem oder mehreren Ausgangsstoffen, der schaumfähigen Reaktionsmischung einverleibt.

Gegenstand der vorliegenden Erfindung ist somit ein Verfahren zur Herstellung von Polyurethanschaumstoffen mit verbesserten mechanischen Eigenschaften aus organischen Polyisocyanaten, Polyolen, Füllstoffen, Katalysatoren, Treibmitteln und gegebenenfalls Kettenverlängerungsmittel und Zusatzstoffen, das dadurch gekennzeichnet ist, daß man als Füllstoffe Lösungen von Alkalisalzen anorganischer Säuren in einer oder mehreren der oben genannten flüssigen Ausgangskomponenten verwendet.

Nach dem erfindungsgemäßen Verfahren werden vorzugsweise weichelastische und halbharte Polyurethanschaumstoffe hergestellt. Es können jedoch auch harte Polyurethanschaumstoffe sowie Integralschaumstoffe erhalten werden.

Zu den für das erfindungsgemäße Verfahren verwendbaren Ausgangskomponenten ist folgendes auszuführen:

Als Polyisocyanate kommen aliphatische und vorzugsweise aromatische mehrwertige Isocyanate in Frage. Im einzelnen seien beispielhaft genannt: Alkylendiisocyanate mit 4 bis

. 0005470

12 Kohlenstoffatomen im Alkylenrest, wie 1,12-Dodecandiisocyanat, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat) 2,4- und 2,6-Hexahydrotoluylen-diisocyanat sowie entsprechende Isomerengemische und vorzugsweise aromatische Di- und Polyisocyanate wie 4,4'-, 2,4'- und 2,2'-Diisocyanato-diphenylmethan und die entsprechenden Isomerengemische, 2,4- und 2,6-Diisocyanato-toluol und die entsprechenden Isomerengemische, 1,5-Diisocyanato-naphthalin, Polyphenyl-polymethylen-polyisocyanate, 2,4,6-Triisocyanato-toluol und vorzugsweise Gemische aus Di- und Polyphenyl-polymethylen-polyisocyanaten (Roh-MDI). Die genannten Di- und Polyisocyanate können einzeln oder in Form von Mischung eingesetzt werden.

Häufig werden auch sogenannte modifizierte mehrwertige Isocyanate, d.h. Produkte, die durch chemische Umsetzung obiger Di- und/oder Polyisocyanate erhalten werden, verwendet. Als modifizierte organische Di- und Polyisocyanate kommen beispielsweise in Betracht: Carbodiimidgruppen aufweisende Polyisocyanate gemäß DE-PS 10 92 007, Allophanat-gruppen aufweisende Polyisocyanate, wie sie z.B. in der britischen Patentschrift 994 890, den ausgelegten Unterlagen des belgischen Patents 761 626 und der NL-OS 71 02 524 beschrieben werden, Isocyanuratgruppen aufweisende Polyisocyanate wie sie z.B. in den DE-PS 10 22 789, 12 22 067 und 10 27 394 sowie den DE-OS 19 29 034 und 20 04 048 beschrieben werden, Urethangruppen aufweisende Polyisocyanate, wie sie z.B. in den ausgelegten Unterlagen des belgischen Patents 752 261 oder der US-PS 33 94 164 beschrieben werden, acylierte Harnstoffgruppen aufweisende Polyisocyanate, z.B. gemäß DE-PS 12 30 778, Biuretgruppen aufweisende Polyisocyanate, z.B. gemäß DE-PS 11 01 394 und GB-PS 889 050; durch Telomerisationsreaktionen hergestellte Polyisocyanate z.B. entsprechend den ausgelegten Unterlagen des belgischen Patents 723 640, Estergruppen aufweisende Polyisocyanate, wie sie z.B. in der GB-PS 965 474 und 10 72 956, der US-PS 35 67 765 und der DE-PS 12 31 688 genannt werden.

Vorzugsweise kommen jedoch zur Anwendung: urethangruppenhaltige Polyisocyanate, Isocyanuratringe enthaltende Polyisocyanate und insbesondere Toluylendiisocyanate, Diphenylmethan-diisocyanate, Mischungen aus Diphenylmethan-diisocyanaten und Polyphenyl-polymethylen-polyisocyanaten (Roh-MDI) und Gemische aus Toluylendiisocyanaten und Roh-MDI.

Als Polyole werden bei dem erfindungegemäßen Verfahren vorzugsweise übliche lineare und/oder verzweigte Polyesterole und insbesonders Polyätherole mit Molekulargewichten von 200 bis 8 000, vorzugsweise 800 bis 5 000, und insbesonders 1 800 bis 3 500, verwendet. In Betracht kommen jedoch auch andere hydroxylgruppenhaltige Polymere mit den genannten Molekulargewichten, beispielsweise Polyesteramide, Polyacetale, wie Polyoxymethylene, und Polycarbonate, insbesonders solche, hergestellt aus Diphenylcarbonat und Hexandiol-1,6 durch Umesterung.

Die Polyesterole können beispielsweise aus Dicarbonsäuren, vorzugsweise aliphatischen Dicarbonsäuren, mit 2 bis 12, vorzugsweise, 4 bis 8 Kohlenstoffatomen im Alkylrest und mehrwertigen Alkoholen, vorzugsweise Diolen, hergestellt werden. Genannt seien beispielhaft aliphatische Dicarbonsäuren, wie Glutarsäure, Pimelinsäure, Korksäure, Azelainsäure, Sebacinsäure, Undecandisäure, Dodecandisäure und vorzugsweise Bernstein- und Adipinsäure, und aromatische Dicarbonsäuren, wie Phthalsäure und Terephthalsäure. Bei-

0005470

spiele für zwei- und mehrwertige, insbesondere zwei- und dreiwertige Alkohole sind: Äthylenglykol, Diäthylenglykol, 1,2- bzw. 1,3-Propylenglykol, Dipropylenglykol, Decandiol-1,10, Glycerin, Trimethylolpropan und vorzugsweise Butandiol-1,4 und Hexandiol-1,6. Sofern zur Herstellung der Polyesterole mehrwertige, insbesondere dreiwertige Alkohole mitverwendet werden, wird deren Gehalt zweckmäßigerweise so berechnet, daß die Funktionalität der erhaltenen Polyesterole maximal 2,5 ist.

Die Polyesterole besitzen Molekulargewichte von 500 bis 2 800, vorzugsweise von 1 000 bis 2 000, und Hydroxylzahlen von 40 bis 280, vorzugsweise von 50 bis 120.

Vorzugsweise als Polyole verwendet werden jedoch Polyätherole, die nach bekannten Verfahren aus einem oder mehreren Alkylenoxiden mit 2 bis 4 Kohlenstoffatomen im Alkylenrest und einem Startermolekül, das 2 bis 8, vorzugsweise 2 bis 4, aktive Wasserstoffatome enthält, hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Äthylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäure, wie Bernsteinsäure, Adipinsäure, Phthalsäure und Terephthalsäure, aliphatische und aromatische, gegebenenfalls N-Mono-, N,N- und N,N'-dialkylsubstituierte Diamine mit 1 bis 4 Kohlenstoffatomen im Alkylrest, wie gegebenenfalls mono- und dialkylsubstituiertes Äthylendiamin, Diäthylentriamin, Triäthylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,4- und 2,6-To- luylendiamin und 4,4'-, 2,4'- und 2,2'-Diamino-diphenylmethane; Monoamine, wie Methylamin, Äthylamin, Isopropylamin, Butylamin, Benzylamin, Anilin, die Toluidine und Naphthylamine. Von den Verbindungen der erwähnten Gruppe sind besonders interessant N,N,N',N'-Tetrakis-(2-hydroxyäthyl)-äthylendiamin, N,N,N',N'-(2-hydroxypropyl)-äthylen-diamin, N,N,N',N'',N''-Pentakis-(2-hydroxypropyl-)äthylen-triamin, Phenyldiisopropanolamin und höhere Alkylenoxid-addukte von Anilin.

Als Startermoleküle kommen ferner in Betracht Alkanolamine, wie Äthanolamin, Diäthanolamin, N-Methyl- und N-Äthyl-diäthanolamin, N-Methyl- und N-Äthyl-dipropanolamin und Triäthanolamin, Hydrazin und Hydrazide. Vorzugsweise verwendet werden mehrwertige, insbesondere zwei- und/oder dreiwertige Alkohole, wie Äthylenglykol, Propylenglykol-1,2 und -1,3, Diäthylenglykol, Dipropylglykol, Butylenglykol-1,4, Hexamethylenglykol-1,6, Glycerin, Trimethylol-propan und Pentaerythrit.

Andere anwendbare Polyole sind die nicht-reduzierenden Zucker, die nicht-reduzierenden Zuckerderivate und bevorzugt deren Alkylenoxid-Addukte, worin die Alkylenoxide 2 bis 4 Kohlenstoffatome haben. Verwendbare nicht-reduzierende Zucker und Zuckerderivate sind z.B. Saccharose, Alkylglykoside, wie Methylglykosid und Äthylenglukosid, ferner Glykolglykoside, wie Äthylenglykolglukosid, Propylenglukosid, Glyzeringlukosid und 1,2,6-Hexantriolglukosid.

In Betracht kommen ferner Polyole auf Basis von Polyphenolen und vorzugsweise deren Alkylenoxid-Addukte, in denen die Alkylenoxide 2 bis 4 Kohlenstoffatome besitzen. Anwendbare Polyphenole sind z.B. Bisphenol A, Bisphenol F, Kondensationsprodukte aus Phenol und Formaldehyd, besonders die Novalake, Kondensationsprodukte aus verschiedenen Phe- nolverbindungen und Acrolein, wobei die einfachsten Substanzen dieser Gruppe die 1,1,3-Tris- (hydroxyphenyl)-propane sind, Kondensationsprodukte verschiedener Phenolverbindungen mit Glyoxal, Glutaraldehd und anderen Dialdehyden, wobei die einfachsten Substanzen dieser Gruppe die 1,1,2,2-Tetrakis-(hydroxylphenyl)-äthane sind.

Eine weitere verwendbare Gruppe von Polyolen sind die Alkylenoxid-Addukte, vorzugsweise die Äthylenoxid-, 1,2-Epoxypropan-, Epoxybutan- und deren Mischungen, -Addukte von Kondensationsprodukten aus aromatischem Amin, Phenol und Aldehyd. Die Kondensationsprodukte erhält man durch Kondensieren eines aromatischen Amins, z.B. Anilin oder Toluidin, eines Phenol, z.B. Phenol oder Kresol und eines Aldehyds, vorzugsweise Formaldehyd bei erhöhten Temperaturen, z.B. im Bereich von 60 bis 180°C. Das Kondensationsprodukt wird dann isoliert und unter Bildung der Polyole mit einem Alkylenoxid umgesetzt. Besonders erwähnenswert sind die Propylenoxid- und Propylen-Äthylenoxid-Addukte von Anilin/Phenol/Formaldehyd-Kondensationsprodukten.

Die Alkylenoxid-Addukte von Phosphor- und Polyphosphorsäuren sind eine weitere verwendbare Gruppe von Polyolen. Bevorzugte Alkylenoxide sind Äthylenoxid, 1,2-Epoxypropan, die Epoxybutane und 3-Chlor-1,2-Epoxypropan. Als Phosphorsäuren sind Phosphorsäure, phosphorige Säure, die Polyphosphorsäuren, wie Tripolyphosphorsäure, und die Polymetaphosphorsäuren günstig.

Bevorzugt verwendet werden Polyätherole mit Molekulargewichten von 400 bis 10 000, vorzugsweise von 400 bis 6 000, und Hydroxylzahlen von 20 bis 400, vorzugsweise von 25 bis 150, die sowohl Äthylenoxid als auch 1,2-Propylenoxideinheiten in der Oxyalkylenkette enthalten, wobei diese entweder statistisch oder blockweise in der Oxyalkylenkette angeordnet

sein können. Insbesondere eingesetzt werden Polyätherole, die vorzugsweise primäre Hydroxylgruppen besitzen. Die verwendeten Polyole können eine Hydroxylzahl aufweisen, die innerhalb eines breiten Bereiches variieren kann. Die Hydroxylzahl ist definiert als die Anzahl von mg Kaliumhydroxid, die zur vollständigen Hydrolyse des aus 1 g Polyol hergestellten vollständig acetylierten Derivats erforderlich ist. Die Hydroxylzahl kann auch durch die folgende Gleichung definiert werden:

$$OH = \frac{56,1 \times 1000 \times f}{MG}$$

worin bedeutet:

OH die Hydroxylzahl des Polyols

f die Funktionalität, d.h. die durchschnittliche Anzahl der Hydroxylgruppen pro Molekül Polyol, und

MG das Molekulargewicht des Polyols.

Welches Polyol jeweils verwendet wird, hängt von der Endverwendung des daraus herzustellenden Polyurethanproduktes ab. Das Molekulargewicht oder die Hydroxylzahl wird in geeigneter Weise so ausgewählt, daß weichelastische, halb-harte und harte Schaumstoffe erhalten werden. Die Polyole weisen vorzugsweise eine Hydroxylzahl von etwa 200 bis etwa 1 000 auf, wenn sie für harte (starre) Schäume verwendet werden, sie weisen eine Hydroxylzahl von etwa 50 bis 150 auf für die Herstellung von halb-harten Schäumen und von etwa 20 bis etwa 70 oder mehr bei der Verwendung für die Herstellung flexibler Schäume. Durch diese Grenzen ist die vorliegende Erfindung jedoch keineswegs beschränkt, sondern diese dienen lediglich der Erläuterung der großen Anzahl von möglichen Kombination der genannten Polyole.

Wesentliches Merkmal der vorliegenden Erfindung ist die Mit-verwendung von Lösungen von Alkalisalzen anorganischer Säuren als verstärkend wirkende Füllstoffe. Geeignete Alkalimetallkationen sind Lithium-, Natrium- und Kalium-Ionen. Vorzugsweise verwendet werden Kaliumsalze. Als Anionen haben sich bewährt Halogenide, wie Fluoride, Chloride, Bromide und Jodide, Schwefelsäurereste, wie Sulfate und Hydrogensulfate, Kohlensäurereste, wie Carbonate und Hydrogencarbonate, Phosphorsäurereste, wie Phosphate, Hydrogenphosphate und Dihydrogenphosphate sowie Nitrate und Chromate. Als sehr wirksam erwiesen sich beispielsweise Alkalimetallsalze, wie Natriumchlorid, Natriumfluorid, Kaliumfluorid, Kaliumchlo-rid, Kaliumbromid, Kaliumjodid, Lithiumbromid, Kaliumchro-mat, Natriumcarbonat, Natriumhydrogencarbonat und Kalium-carbonat. Vorzugsweise verwendet werden Kaliumfluorid und Kaliumchlorid.

Die Alkalisalze der anorganischen Säuren werden der schaumfähigen Reaktionsmischung in Mengen von 0,01 bis 5 Gew.%, vorzugsweise 0,05 bis 1 Gew.% und insbesondere 0,1 bis 0,5 Gew.%, bezogen auf das Gesamtgewicht des organischen Polyisocyanats und Polyols, einverleibt. Hierbei ist erfindungswesentlich, daß die Alkalisalze der anorganischen Säuren in der schaumfähigen Reaktionsmischung gelöst sind. Zum Einbringen der erfindungsgemäß verwendbaren Salze werden diese am zweckmäßigsten in einer der unter den Reaktionsbedingungen flüssigen Ausgangskomponente, vorzugsweise im Kettenverlängerungsmittel und/oder - sofern Wasser als Treibmittel verwendet wird - insbesonders im Wasser gelöst. So wird beispielsweise bei wasserhaltigen Polyurethan-Systemen, wie bei den üblichen Weich- und Halbhartschaumstoff-Systemen, das Alkalisalz der anorganischen Säuren im Wasser gelöst. Bei Polyurethan-Systemen mit keinem oder wenig Wasser, wie bei Integralschaumstoff-Systemen, löst man es zweckmäßigerweise im niedermolekularen Kettenverlängerungs-

mittel, vorzugsweise in Butandiol-1,4 oder insbesondere Äthylenglykol. Die Konzentration dieser Lösungen kann beliebig gewählt werden unter der Maßgabe, daß die Konzentation in der schaumfähigen Reaktionsmischung den obengenannten Mengen entspricht. Salzkonzentrationen über 5 Gew.%, bezogen auf das Gesamtgewicht des organischen Polyisocyanats und Polyols, in der schaumfähigen Reaktionsmischung sind zwar möglich und bringen eine weitere Erhöhung der Tragfestigkeit des Schaumstoffes, doch verschlechtern sich dann andere mechanische Eigenschaften, wie der Druckverformungsrest relativ stark, so daß der Schaumstoff an Elastizität verliert.

Die Polyurethanschaumstoffe werden nach dem erfindungsgemäßen Verfahren aus den obengenannten organischen Polyisocyanaten, Polyolen und Alkalisalzen anorganischer Säuren in Gegenwart von Katalysatoren, Treibmitteln und gegebenenfalls Kettenverlängerungsmittel und Zusatzstoffen hergestellt.

Geeignete Katalysatoren zur Beschleunigung der Umsetzung zwischen den Polyolen, dem Wasser, gegebenenfalls Kettenverlängerungsmitteln und den Polyisocyanaten sind beispielsweise tertiäre Amine, wie Dimethylbenzylamin, N,N,N'N'-Tetramethyldiamino-äthyläther, Bis-(dimethyl)-aminopropyl)-harnstoff, N-Methyl- bzw. N-Äthylmorpholin, Dimethylpiperazin, 1,2-Dimethylimidazol, 1-Azo-bicyclo(,3,3,0)-octan und vorzugsweise Triäthylendiamin, Metallsalze, wie Zinndioctoat, Bleioctoat, Zinn-diäthylhexoat und vorzugsweise Zinn-(II)salze und Dibutylzinndilaurat sowie insbesonders Mischungen aus tertiären Aminen und organischen Zinnsalzen. Vorzugsweise verwendet werden 0,1 bis 2 Gew.% Katalysator auf Basis tertiärer Amine und/oder 0,01 bis 0,2 Gew.% Metallsalze, bezogen auf das Polyolgewicht.

Die Konzentrationen dieser Katalysatoren brauchen dabei beim Zusatz der erfindungsgemäßen Salze nicht erhöht zu werden. Manche der zugesetzten Salze wirken im Gegenteil selbst als Katalysator für die Urethanbildung und die übliche Katalysatormenge kann dann reduziert werden. Besonders ausgeprägt und nicht erklärbar ist dieser Effekt beim Kaliumfluorid.

Zu Treibmitteln, welche im erfindungsgemäßen Verfahren verwendet werden können, gehört Wasser, das mit Isocyanatgruppen unter Bildung von Kohlendioxid reagiert. Die Wassermengen, die zweckmäßigerweise verwendet werden können, betragen 0,1 bis 2 %, bezogen auf das Gewicht an Polyisocyanat. Gegebenenfalls können auch größere Wassermengen verwendet werden, jedoch vorzugsweise dann nicht, wenn die thermische Stabilität oder die Wärmeisolationseigenschaften von besonderer Bedeutung sind.

Andere verwendbare Treibmittel sind niedrig siedende Flüssigkeiten, die unter dem Einfluß der exothermen Polymerisationsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluoräthan und 1,1,2-Trichlor-1,2,2-trifluoräthan. Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung von geschäumten Polyurethanmassen hängt ab von der Schaumdichte, die man erreichen will sowie gegebenenfalls von der Mitverwendung von Wasser. Im allgemeinen liefern

0005470

Mengen von 5 bis 40 Gewichtsprozent, bezogen auf 100 Gewichtsteile organisches Polyisocyanat, zufriedenstellende Ergebnisse. Während man normale weiche oder halbharte Schaumtypen bevorzugt mit Wasser treibt, benutzt man zur Herstellung von Integralschaumstoffen, d.h. Schäumen mit einer kompakten Außenhaut, gewöhnlich physikalische Treibmittel.

Gegebenenfalls ist es auch zweckmäßig zur Herstellung der geschäumten, verstärkten Kunststoffe neben den höhermolekularen Polyolen zusätzlich Kettenverlängerungsmittel zu verwenden. Die Kettenverlängerungsmittel besitzen Molekulargewichte kleiner als 2 000, vorzugsweise von 30 bis 600, und weisen vorzugsweise zwei aktive Wasserstoffatome auf. In Betracht kommen beispielsweise aliphatische und/oder aromatische Diole mit 2 bis 14, vorzugsweise 4 bis 10, Kohlenstoffatomen, wie Äthylenglykol, Propandiol, Decandiol-1,10 und vorzugsweise Butandiol-1,4, Hexandiol-1,6 und Bis-(2-hydroxyäthyl)-hydrochinon, Diamine, wie Äthylendiamin und 4,4'-Diaminodiphenylmethan, Äthanolamine, wie Triäthanolamin und Polyhydroxylverbindungen, wie Glycerin, Trimethylpropan und niedermolekulare hydroxylgruppenhaltige Polyalkylenoxide aus den vorgenannten Ausgangsstoffen.

Der Reaktionsmischung können auch noch Zusatzstoffe einverleibt werden. Genannt seien beispielsweise oberflächenaktive Schaumstabilisatoren, Hydrolysenschutzmittel, Porenregler, fungistatisch und bakteriostatisch wirkende Substanzen, Farbstoffe, Pigmente und Flammschutzmittel.

In Betracht kommen beispielsweise oberflächenaktive Substanzen, welche zur Unterstützung der Homogenisierung der Ausgangsstoffe dienen und gegebenenfalls auch geeignet sind, die Zellstruktur der Schaumstoffe zu regulieren. Genannt seien beispielhaft Siloxan-Oxalkylen-Mischpolymerisate und andere Organopolysiloxane, oxäthylierte Alkylphenole, oxäthylierte Fettalkohole, Paraffinöle, Rizinusöl- bzw.
Rizinolsäureester und Türkischrotöl, die in Mengen von 0,2
bis 6 Gewichtsteilen pro 100 Gewichtsteile Polyisocyanat
angewandt werden.

Geeignete Flammschutzmittel sind beispielsweise Trikresylphosphat, Tris-2-chloräthylphosphat, Tris-chlorpropylphosphat und Tris-2,3-dibrompropylphosphat.

Außer den bereits genannten halogensubstituierten Phosphaten
können auch organische Flammschutzmittel, wie Antimontrioxid, Arsenoxid, Ammoniumphosphat und Calciumsulfat zum
Flammfestmachen der Polyurethanschaumstoffe verwendet werden. Im allgemeinen hat es sich als vorteilhaft erwiesen,
5 bis 50 Gewichtsteile, vorzugsweise 5 bis 25 Gewichtsteile
der genannten Flammschutzmittel für jeweils 100 Gewichtsteile an organischem Polyisocyanat zu verwenden.

Nähere Angaben über die obengenannten anderen üblichen Zusatzstoffe sind der Fachliteratur, beispielsweise der Monographie von J.H. Saunders und K.C. Frisch "High Polymers"
Band XVI, Polyurethanes, Teil 1 und 2, Verlag Interscience
Publishers 1962 bzw. 1964, zu entnehmen.

Zur Herstellung der Polyurethanschaumstoffe werden die organischen Polyisocyanate und Polyole bzw. Mischungen aus
Polyolen und Kettenverlängerungsmittel in solchen Mengen
zur Umsetzung gebracht, daß das Verhältnis von NCO : OH-
Gruppen 1 : 0,8 bis 1,2, vorzugsweise ungefähr 1 : 1,
beträgt.

Die Polyurethanschaumstoffe werden nach dem Präpolymer -
- und vorzugsweise nach dem one shot-Verfahren hergestellt.
Bei Verwendung einer Mischkammer mit mehreren Zulaufdüsen können die Ausgangskomponenten einzeln zugeführt und in der Mischkammer intensiv vermischt werden. Hierbei werden die Alkalisalze der anorganischen Säure, wie bereits dargelegt - zweckmäßigerweise in Wasser oder den Kettenverlängerungsmitteln gelöst. Als besonders vorteilhaft hat es sich erwiesen, nach dem Zweikomponenten-Verfahren zu arbeiten und die Mischung aus Polyolen, Alkalisalzen von anorganischen Säuren, Katalysatoren, Treibmitteln und gegebenenfalls Kettenverlängerungsmitteln und Zusatzstoffen zu der Komponente A zu vereinigen und als Komponente B die organischen Polyisocyanate zu verwenden. Vorteilhaft ist hierbei beispielsweise, daß die Komponenten A und B getrennt gelagert und raumsparend transportiert werden können.

Zur Herstellung der Polyurethanschaumstoffe werden die beschriebenen Ausgangsstoffe in den genannten Mengenverhältnissen intensiv bei Temperaturen von 20 bis 60°C, vorzugsweise von 25 bis 35°C, gemischt und danach wird die Reaktionsmischung in offenen oder geschlossenen Formen aufschäumen gelassen.

Je nach Art des hergestellten Polyurethanschaumstoffes besitzen die Produkte Dichten von 30 bis 80 kg/m$^3$ für weich- elastische Schaumstoffe, von 60 bis 150 kg/m$^3$ für halbharte Polyurethanschaumstoffe sowie durchschnittliche Dichten von 100 bis 1 100 kg/m$^3$ für Integralschaumstoffe.

Die erhaltenen Polyurethanschaumstoffe werden in den üblichen Verwendungsbereichen von Polyurethan wie Möbel- und Polsterschaum, Isolierschaum sowie zur Herstellung von Fertigteilen im Automobilbereich wie Armlehnen, Stoßstangen, Armaturentafeln usw. eingesetzt.

Die in den Beispielen genannten Teile beziehen sich auf das Gewicht.

Die in den Beispielen verwendeten Polyole weisen folgende
Zusammensetzung auf:

Polyol A

Ein trifunktionelles Polyol, hergestellt durch Addition von
ca. 84 Gewichtsteilen 1,2-Propylenoxid und anschließend ca.
16 Gewichtsteilen Äthylenoxid an 1,1,1-Trimethylolpropan
bis zu einem durchschnittlichen Molekulargewicht von 4 800
und einer durchschnittlichen Hydroxylzahl von 35.

Polyol B

Ein trifunktionelles Polyol, hergestellt wie Polyol A, jedoch mit einem durchschnittlichen Molekulargewicht von
6 000 und einer Hydroxylzahl von 28.

Polyol C

Ein hochfunktionelles Polyol, hergestellt durch Addition
von Propylenoxid auf ein Wasser-/Zuckergemisch mit einer
Hydroxylzahl von etwa 400.

Polyol D

Ein vierfunktionelles Polyol, hergestellt durch Addition
von Propylenoxid an Pentaerythrit mit einem durchschnittlichen Molekulargewicht von 600 und einer Hydroxylzahl von
380.

Beispiele 1 bis 14

Halbharte Polyurethanschaumstoffe
allgemeine Herstellungsvorschrift:

Eine Mischung (Polyolkomponente) aus

84,6 Teilen Polyol B
12,6 Teilen Triäthanolamin
 0,2 Teilen N,N-Dimethyläthanolamin und
 2,6 Teilen wässeriger Salzlösung wird mit

80 Teilen eines Gemisches aus Diphenylmethan-diisocyanaten
und Polyphenyl-polymethylen-polyisocyanaten (Roh-MDI) mit
einer Viskosität von 200 mPa.S bei 25°C intensiv vermischt.
Die schaumfähige Reaktionsmischung läßt man in einer Form
frei aufschäumen.

Die Art und Konzentration der verwendeten Salzlösungen sind
in der Tabelle zusammengefaßt. Die angegebene Salzkonzentrationen beziehen sich auf den Salzgehalt der gesamten Polyolkomponente.

Als Maß für die Tragfähigkeit der Schäume wurden die zu
einer 10, 50 und 70 %igen Stauchung erforderlichen Kräfte
(Einheit: Newton) ermittelt. Sie werden im folgenden als
$F_{10}$, $F_{50}$ und $F_{70}$ bezeichnet. Gemessen wurde an Würfeln der
Kantenlänge 5 cm. Die Raumgewichte der Schäume lagen um
80 g/l.

## Vergleichsbeispiel A

Man verfährt analog den Angaben der allgemeinen Herstellungsvorschrift der Beispiele 1 bis 14, verwendet jedoch anstelle
der wässerigen Salzlösung reines Wasser.

## Vergleichsbeispiel B

Eine Mischung (Polyolkomponente) aus 59,6 Teilen Polyol B 25,0 Teilen Polyätherpolyol mit aufgepfropften Styrol-Acrylnitril

12,6 Teilen Triäthanolamin

 0,2 Teilen N,N-Dimethyläthanolamin und 2,6 Teilen Wasser wird mit 80 Teilen Roh-MDI bei 25°C intensiv gemischt und anschließend in einer Form frei aufschäumen gelassen.

Tabelle

| Beispiel | Zusatz | Zur Stauchung erforderliche Kräfte (Newton) | | |
|---|---|---|---|---|
| | | $F_{10}$ | $F_{50}$ | $F_{70}$ |
| 1 | 0,15 % NaCl | 170 | 273 | 530 |
| 2 | 0,30 % NaCl | 230 | 350 | 660 |
| 3 | 0,45 % NaCl | 275 | 430 | 800 |
| 4 | 0,60 % NaCl | 325 | 500 | 925 |
| 5 | 0,75 % NaCl | 380 | 585 | 1 070 |
| 6 | 0,30 % NaF | 136 | 219 | 427 |
| 7 | 0,30 % $NaHCO_3$ | 195 | 325 | 610 |
| 8 | 1,20 % LiBr | 215 | 340 | 690 |
| 9 | 0,30 % KCl | 260 | 400 | 730 |
| 10 | 0,60 % KCl | 345 | 520 | 920 |
| 11 | 0,30 % KJ | 180 | 290 | 550 |
| 12 | 0,30 % KF | 390 | 560 | 1 040 |
| 13 | 0,30 % $K_2CO_3$ | 310 | 490 | 845 |
| 14 | 0,30 % $K_2CrO_4$ | 190 | 290 | 550 |
| Vergleichsbeispiel A | reines | 95 | 160 | 320 |
| Vergleichsbeispiel B | 25 % Pfropfpolyol | 160 | 245 | 470 |

## Vergleichsbeispiel C (Weichschaumstoff)

Es wurde ein Weichschaumstoff aus folgenden Komponenten hergestellt:

Polyolkomponente:

94,5   Teile Polyol A
 0,4   Teile Polyol D
 2,7   Teile Wasser
 1,9   Teile N-Methyldicyclohexylamin
 0,05  Teile Dibutyl-zinn-dilaurat
 0,5   Teile Schaumstabilisator B 4690 der
        Firma Th. Goldschmidt

Die Polyolkomponente wurde gut vermischt und anschließend mit 33,5 Teilen Isocyanat zur Reaktion gebracht. Das Isocyanat war dabei eine 80 : 20 Mischung von käuflichem sogen. TDI-80 und Polyphenylpolymethylen-polyisocyanat (Roh-MDI).

## Beispiel 15

Es wurde wie im Vergleichsbeispiel C verfahren. Anstelle von reinem Wasser wurde jedoch eine 20 %ige, wäßrige Kaliumchloridlösung zugegeben, so daß die KCl-Konzentration in der gesamten Polyolkomponente 0,54 % betrug.

Die Raumgewichte der beiden Schäume lagen zwischen 35 und 40 g/l. Die wie oben bestimmten Kräfte zu 20, 40 und 60 %igen Stauchung zeigt die Tabelle:

|                     | $F_{20}$ | $F_{40}$ | $F_{60}$ | $F_{max.}$ |
|---------------------|------|------|------|-------|
| Vergleichsbeispiel C | 7,6  | 10   | 16,7 | 40,7  |
| Beispiel 15         | 10,3 | 17,7 | 31,9 | 84,4  |

Vergleichsbeispiel D (Hartschaumstoff)

Polyolkomponente:

73,7 Teile Polyol C
 0,9 Teile Schaumstabilisator B 1400
        der Firma Th. Goldschmidt
 1,5 Teile Dimethylcyclohexylamin
 1,8 Teile Wasser
22,1 Teile Monofluortrichlormethan

Die Polyolkomponente wurde vermischt und mit 111 Teilen
Roh-MDI zur Reaktion gebracht. Die ermittelte Druckfestigkeit des Schaumes betrug 128 k.Pa.

Beispiel 16

Es wurde analog dem Vergleichsbeispiel D verfahren. Anstelle von Wasser wurde eine 20 %ige wäßrige Kaliumchloridlösung eingesetzt. Die Konzentration des Salzes in der Polyolkomponente betrug demnach 0,36 %. Die gemessene Druckfestigkeit des Schaumes betrug 146 k.Pa.

Vergleichsbeispiel E (Integralschaumstoff)

Polyolkomponente:

76,0 Teile Polyol A
 8,3 Teile Äthylenglykol-1,2
 0,2 Teile Wasser
 0,02 Teile Dibutyl-Zinn-dilaurat
 1,25 Teile 25 %ige Lösung von 1,4-Diazabicyclo-(2,2,2)-
        octan in Butandiol-1,4
15,0 Teile Monofluortrichlormethan

Die Polyolkomponente wurde gut vermischt und mit 64 Teilen eines modifizierten Isocyanats, das durch Reaktion von 89 Teilen 4,4'-Diisocyanato-diphenylmethan mit 11 Teilen 2,2'-Dihydroxy-dipropyläther erhalten wurde, umgesetzt. Die Umsetzung erfolgte dabei in einer geschlossenen Aluminiumform mit den Abmessungen 10 x 10 x 5 cm. Die Probekörper hatten eine kompakte, ungeschäumte Außenhaut und einen geschäumten, zelligen Kern.

Die Gesamtdichte der Probekörper lag bei 110 g/l.

Beispiel 17

Es wurden Probekörper wie im Vergleichsbeispiel E hergestellt. Zum Unterschied vom Vergleichsbeispiel wurden vor dem Herstellen der Polyolkomponente 8,3 Teile Äthylenglykol-1,2 und 0,2 Teile Wasser gesondert gemischt und darin 0,232 Teile Kaliumfluorid und 0,232 Teile Kaliumchlorid aufgelöst. Die Gesamtkonzentration an Salz in der Polyolkomponente betrug also 0,464 %. Die erhaltenen mechanischen Werte der Proben aus Beispiel 17 und Vergleichsbeispiel E sind in der folgenden Tabelle zusammengefaßt. Dabei wurde die Zugfestigkeit (angegeben in $N/nm^2$) und die Reißdehnung (angegegen in %) an genannten Probekörper, d.h. zelligen Kern plus kompakter Außenhaut, bestimmt.

|  | $F_{10}$ | $F_{50}$ | $F_{max.}$ | Zugfestigkeit | Dehnung |
|---|---|---|---|---|---|
| Vergleichsbeispiel E | 380 | 560 | 920 | 0,49 | 244 |
| Beispiel 17 | 640 | 1 400 | 2 100 | 0,63 | 266 |

Man erkennt den typischen Effekt, wie er von gepfropften Polyolen bekannt ist: deutliche Erhöhung der Stauchhärte,

0005470

BASF Aktiengesellschaft          -26-          O.Z. 0050/033167

Erhöhung der Zugfestigkeit und geringfügige Verschlechterung der Dehnung.

Vergleichsbeispiel F

Polyolkomponente:

76,0 Teile Polyol B
 6,0 Teile Äthylenglykol-1,2
 6,0 Teile Butandiol-1,4
 0,2 Teile Wasser
 0,02 Teile Dibutyl-Zinn-dilaurat
 1,7 Teile 25 %ige Lösung von 1,4-Diazabicyclo-(2,2,2)-
          octan in Butandiol-1,4
15,0 Teile Monofluortrichlormethan

Es wurden mit derselben Isocyanatkomponente, wie im Vergleichsbeispiel E beschrieben, Würfel der Kantanlänge 10 cm aus Integralschaum hergestellt. Durch Einbringen verschiedener Gewichtsmengen in die Aluminiumform wurde die Gesamtdichte des Probekörpers variiert und das nachträgliche Schrumpfen ("Einfallen" der Seitenteile" beobachtet.

Beispiel 18

Es wurde wie im Vergleichsbeispiel F verfahren. Zum Unterschied wurde jedoch kein reines Äthylenglykol-1,2, sondern eine 7 %ige Lösung von Kaliumfluorid in Äthylenglykol verwendet. Die Gesamt-Konzentration an Kaliumfluorid in der Polyolkomponente betrug demnach 0,4 %.

Das unterschiedliche Schrumpfverhalten von Proben nach Vergleichsbeispiel F und nach Beispiel 18 ist in der Tabelle zusammengestellt:

|  | Dichte der Proben | Schrumpfbeurteilung |
|---|---|---|
| Vergleichs- | 160 g/l | schwacher Schrumpf |
| beispiel | 151 g/l | mittlerer Schrumpf |
|  | 112 g/l | sehr starker Schrumpf |
| Beispiel 18 | 151 g/l | kein Schrumpf |
|  | 117 g/l | kein Schrumpf |

Patentansprüche

1. Verfahren zur Herstellung von Polyurethanschaumstoffen mit verbesserten mechanischen Eigenschaften aus organischen Polyisocyanaten, Polyolen, Füllstoffen, Katalysatoren, Treibmitteln und gegebenenfalls Kettenverlängerungsmitteln und Zusatzstoffen, dadurch gekennzeichnet, daß man als Füllstoffe Lösungen von Alkalisalzen anorganischer Säuren in einer oder mehreren der obengenannten flüssigen Ausgangskomponenten verwendet.

2. Verfahren gemäß Anspruch 1, dadurch gekennzeichnet, daß man die Alkalisalze von anorganischen Säuren in Mengen von 0,01 bis 5 Gew.%, bezogen auf das Gesamtgewicht des organischen Polyisocyanats und Polyols verwendet.

3. · Verfahren gemäß Anspruch 1 und 2, dadurch gekennzeichet, daß man Lösungen von Alkalisalzen anorganischer Säuren in Wasser oder Kettenverlängerungsmitteln oder deren Gemische verwendet.

4. Verfahren gemäß Anspruch 1 und 2, dadurch gekennzeichnet, daß man Lösungen von Alkalisalzen anorganischer Säuren in Wasser und/oder Äthylenglykol verwendet.

5. Verfahren gemäß Anspruch 4, dadurch gekennzeichnet, daß man wäßrige Lösungen von Alkalisalzen anorganischer Säuren verwendet.

Nummer der Anmeldung

EP 79 10 1284

Europäisches
Patentamt

**EUROPÄISCHER RECHERCHENBERICHT**

| | **EINSCHLÄGIGE DOKUMENTE** | | **KLASSIFIKATION DER ANMELDUNG (Int.Cl.²)** |
|---|---|---|---|
| Kategorie | Kennzeichnung des Dokuments mit Angabe, soweit erforderlich, der maßgeblichen Teile | betrifft Anspruch | |
| X | FR - A - 2 245 689 (METZELER SCHAUM)<br><br>* Patentansprüche 1-11; Seite 2, Zeilen 32-53, Zeile ᴜ; Beispiele *<br><br>& DE - A - 2 437 790<br><br>-- | 1-5 | C 08 J 9/00<br>C 08 L 75/04 |
| | JAPANESE PATENTS REPORT, Section Chemical, vol. 77, nr.19, 10. Juni 1977, Derwent Publications, London, GB | 1-5 | **RECHERCHIERTE SACHGEBIETE (Int. Cl.²)** |
| D | & JP - B - 77 016753 (KAO SOAP)<br><br>* Zusammenfassung *<br><br>-- | | C 08 J 9/00<br>C 08 J 9/02<br>C 08 G 18/22 |
| X | US - A - 2 911 379 (E.E. PARKER)<br><br>* Patentansprüche 1-4; Spalte 2, Zeilen 16-33 *<br><br>---- | 1-5 | |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 24-07-1979 | HALLEMEESCH |

EPA form 1503.1  06.78